# EUROPEAN PATENT APPLICATION

(11) **EP 4 484 026 A1**
(43) Date of publication of application: **01.01.2025**
(21) Application number: 23461612.6
(22) Date of filing: 28.06.2023
(51) Int. Cl.: B08B 7/00, B08B 9/08, B08B 17/04

(54) **TANK CLEANING ARRANGEMENT**

(71) Applicant: Goodrich Corporation, Charlotte, NC 28217 (US)
(72) Inventor: KROCZEK, Piotr Jacek, 51-317 Wroclaw (PL); TUREK, Lukasz, 51-317 Wroclaw (PL)
(74) Representative: Dehns

(57) **Abstract**

A cleaning arrangement for cleaning an interior volume of a tank, the arrangement comprising: a tank (100), the interior of which is to be cleaned, the tank having a top (104), a bottom (106), and, extending from the top to the bottom, an outer wall (102) and an inner wall (108) defining the interior volume (110); and wherein the inner wall (108) is provided with a removable coating (114).

## Description

### TECHNICAL FIELD

The present disclosure relates to ways of cleaning the interior of a tank such as, but not exclusively, a waste tank e.g. in an aircraft.

### BACKGROUND

Tanks or reservoirs containing matter such as waste from a sanitation system, or other matter, which may be contaminated or hazardous or generally undesirable if left on the inner surfaces of the tank for a period of time often include a device that extends into and sprays water or some cleaning fluid around the tank to clean the tank. This can avoid the need for manual cleaning of the tank which can be unpleasant or even dangerous. Furthermore, the tanks are often too small to enable a person to access the interior to clean it properly, or the tank may be vacuum sealed and so not accessible for manual cleaning and/or access to the tanks may be too difficult for the tank to be cleaned by a person. Passenger aircraft include large tanks for human waste from the aircraft toilets. These tanks are emptied after a flight and the inside of the tank is cleaned. This is usually done by means of a device, known as a rinse nipple, having nozzles through which pressurised water or a cleaning solution is sprayed around the interior of the tank.

A conventional rinse nipple includes a housing part to which a rinse hose providing the cleaning fluid is connected. The housing extends through the tank wall. A rinse head is provided at the end of the housing located inside the tank. The rinse head is provided with multiple openings or nozzles and the pressurised fluid is ejected out through the nozzles to clean the tank. Some rinse nipples have a rotatable rinse head. To avoid the need for power to be supplied to rotate the rinse head, the openings or nozzles are angled and offset relative to the axis of rotation of the head. This positioning provides momentum about the axis to cause the head to spin about the axis thus maximising the coverage of the fluid inside the tank.

Whilst the multiple nozzles and spinning head ensures that the fluid is sprayed as much as possible around the tank interior, due to the presence of various components and fittings that may be provided on the tank walls, extending to the tank interior, there may be some areas that are effectively obstructed or hidden by these components and are not reached by the spray from the spinning head. Furthermore, particularly when the tanks are large. The fluid may not reach the bottom of the tank, or may not reach the bottom with sufficient force to provide effective cleaning. This can result in waste material or the like remaining in those areas where the pressurised fluid does not reach, and clogging or building up. The tank cannot, therefore, be fully purged of all of the waste, which can cause contamination of the tank.

There is, therefore, a need for a cleaning arrangement that can ensure that a greater area of the tank interior is contacted by the cleaning fluid in a simple and efficient manner.

### SUMMARY

According to the present disclosure, there is provided a cleaning arrangement for cleaning an interior volume of a tank, the arrangement comprising: a tank, the interior of which is to be cleaned, the tank having a top, a bottom, and, extending from the top to the bottom, an outer wall and an inner wall defining the interior volume; and wherein the inner wall is provided with a removable coating.

A cleaning method is also provided.

### BRIEF DESCRIPTION

Examples of the cleaning arrangement according to this disclosure will be described with reference to the drawings. It should be noted that these are merely examples and variations are possible within the scope of the claims.
Figure 1 shows an example of a known tank and rinse arrangement for the purposes of explanation.
Figure 2 is shown to explain the problem of the known device such as shown in Fig. 1.
Figure 3 shows an example of a rinse arrangement according to the disclosure.
Figure 4A to 4C show the steps in forming a cleaning arrangement according to the disclosure.
Figures 5A to 5C are provided to explain the use of a cleaning arrangement according to the disclosure.
Figure 6 illustrates a detail of a cleaning arrangement according to the disclosure.
Figure 7 shows an example of an inlet port of a cleaning arrangement according to the disclosure.

### DETAILED DESCRIPTION

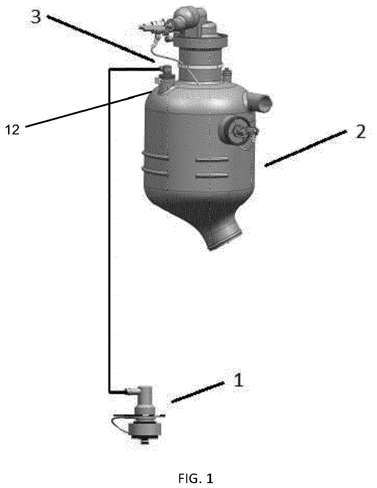

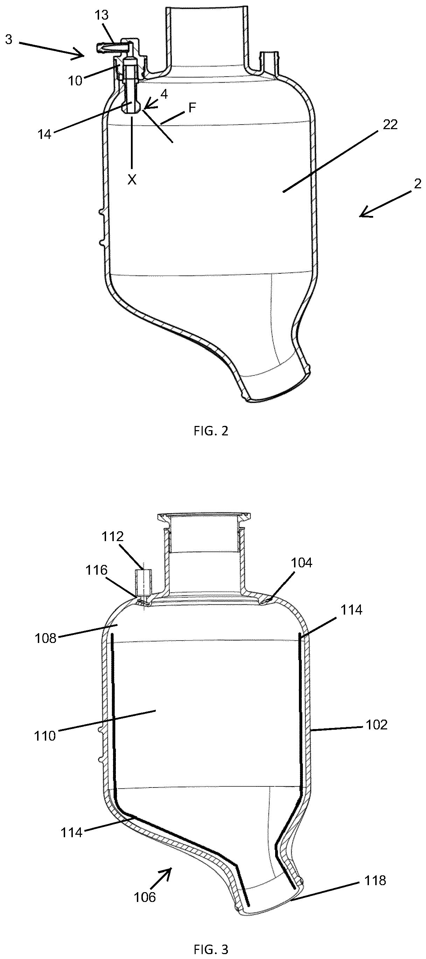

A typical rinse device is shown in Figs. 1 and 2. A rinse nozzle 3 is shown mounted in the wall 12 of a tank 2 or vat or other reservoir. The rinse nozzle 3 is connected, in use, to a rinse port 1 from which rinse fluid is provided to the rinse nozzle from a rinse fluid supply (not shown). Figure 2 shows, in cross-section, the rinse nozzle 3 mounted in the wall 12 of the tank 2, at the top of the tank. Apertures or jets 4 are formed in the nozzle 3 such that as rinse fluid is provided to the nozzle 3 it is sprayed out through the jets 4 around the interior 22 of the tank to clean the tank. A typical nozzle 3 comprises a housing 10, one end of which is provided with a fitting 13 arranged to be attached to a pipe or the like via which pressurised water or cleaning solution is provided. At the other end of the housing through which the pressurised fluid flows, which extends into the tank, is mounted a rinse head 14 mounted to rotate relative to the housing 10. The rinse head is arranged to rotate about an axis of rotation X which is the axis through the housing from the one end to the other end.

The rinse head 14 is provided with a number of holes or jets 4 via which the pressurised fluid F forced through the housing is ejected into the tank. The jets can be positioned offset from the axis of rotation and at angles such that the ejection of the pressurised fluid F provides a force that causes the rinse head 14 to rotate relative to the housing about the axis X.

The pressurisation of the fluid and the rotation of the rinse head provides a good range of coverage of the interior of the tank with cleaning fluid. In some cases, however, areas may exist, due to the presence of other components on the inside of the tank, that fluid from the rinse head cannot reach. Alternatively, because the rinse nozzle is typically small and mounted into the top of the tank, the pressurized fluid F may not adequately reach the bottom or other locations in the interior of the tank, or at least not with sufficient force to adequately clean the tank. Furthermore, as can be seen in Fig. 2, the jets do not clean the tank in a symmetrical manner.

The cleaning arrangement according to this disclosure is designed to address these problems as will be described with reference to Figs. 3 to 7.

Specifically, the arrangement of this disclosure provides a coating applied to the interior of the tank from the inlet port, the coating being removable as part of the tank cleaning process, such that removal of the coating also removes all waste, debris, contamination that has accumulated on the coating (and that would have otherwise accumulated on the tank wall if the coating had not been present).

The coating may be e.g. a wax coating, for example ceresin wax, that can be removed by application of heat to the coating such that the coating liquifies and is removed via the drain port of the tank. Other removable coatings, removable by application of heat or pressure or in other manners may also be applied. The substance used for the coating should be easy to apply via the inlet port at the top of the tank and should be able to adhere to the tank interior wall (e.g. by becoming more viscous and 'setting' or adhering to the wall due to cooling as it contacts the tank interior wall). It should have good adhesive properties to adhere to the tank wall and also so that contaminants adhere to the coating, and it should be easily removable e.g. by heating the coating to a temperature slightly above the maximum working temperature of the tank e.g. 90 deg. C. With such a coating, it can be quickly and easily applied to the tank interior walls via the inlet port e.g. as a liquid spray and, on contacting the cooler tank walls, will adhere to the walls and set to provide a barrier between the waste (e.g. grey water for a sanitation system such as on an aircraft) and the tank. The coating remains stable during normal use of the tank to collect waste (i.e. should be selected to remain stable at the temperatures and pressures that normally occur during use of the tank to collect waste. When the tank is to be flushed/emptied, the waste is flushed out via the drain port 116 in the usual manner and then the coating can be removed e.g. by heating to its `melt' temperature, or application of a 'dissolving' substance e.g. ethanol, such that it becomes less viscous and runs down to the bottom of the tank and out from the drain port 118 taking the waste contaminants with it and leaving the interior wall of the tank clean.

In more detail, as shown in e.g. Fig. 3, the assembly includes a tank 100 having an outer wall 102, a top 104 and a bottom 106, and an inner wall 108 which defines an interior volume 110 of the tank to be cleaned by the cleaning arrangement. An inlet port 112 is provided in the tank at an upper portion A of the tank (either through the top or through an upper region of the outer wall) and extends into the volume 110 to be cleaned. The end of the port 112 in the tank is preferably formed with a spray nozzle 116. The inner wall 108 is provided with a coating 114 of a substance such as wax, which provides a barrier between the waste in the tank and the tank wall 108, such that contaminants in the tank, to be removed by cleaning, accumulate on the coating 114 rather than on the tank wall. A drain port 118 is provided at the bottom of the tank for draining of waste and the removed coating from the tank.

As the coating 114 can be removed, as described further below, taking all accumulated contamination with it as it drains from the tank, there is no need to clean the inner wall 108 of the tank using the conventional rinse fluid/nozzle arrangement (although if desired, such cleaning of the tank can also be performed after removal of the coating 114).

When the tank is being prepared for the next use e.g. the next in-flight service if in an aircraft sanitation system, a new coating needs to be applied to the tank interior.

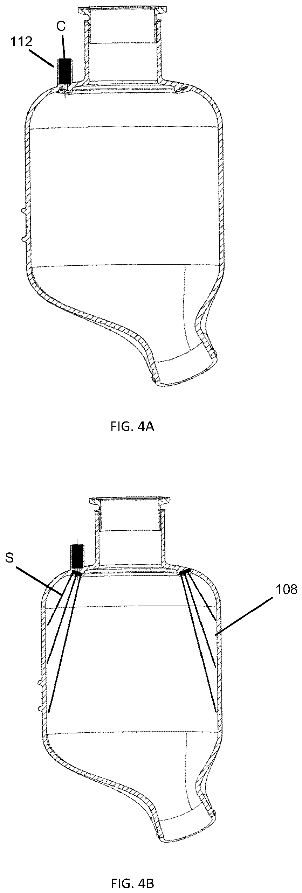

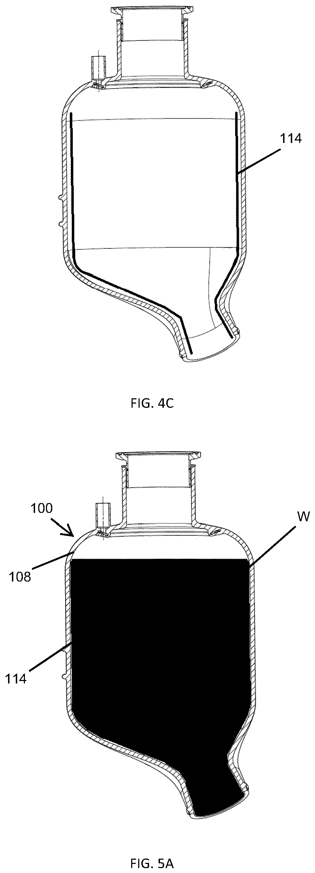

Figs. 4A to 4C show an example of how a coating is applied to the tank interior in accordance with the disclosure.

First, the substance C for forming the coating is provided to the inlet port 112 in a liquid, or gaseous or mist state. In one example, this is liquid wax e.g. liquid ceresin wax, but other substances may also be used. The substance is sprayed (indicated by lines S in Fig. 4B) around the interior of the tank via spray nozzles 116 which direct the substance to the inner wall 108 of the tank to form a coating 114 adhered to the inner wall. The temperature and/or pressure conditions will be such that the substance used for the coating sets on the tank inner wall 108. For example, the substance may be selected such that its setting temperature corresponds to that of the tank inner wall when the tank is being prepared. In other examples, the tank may be cooled during this coating application process. In other examples, the pressure of the spray may be such that the substance sets when it contacts the inner wall. The disclosure is not limited in this respect. Once the coating 114 is provided across the inner wall of the tank, the tank is ready for use.

Use of the prepared tank will now be described by way of example, with reference to Figs. 5A to 5C.

Fig. 5A shows a tank 100 filled with waste W. The coating 114, which has already been applied before the tank is put into surface, provides a barrier between the waste W and the tank inner wall 108 so that there is no direct contact between the waste and the tank.

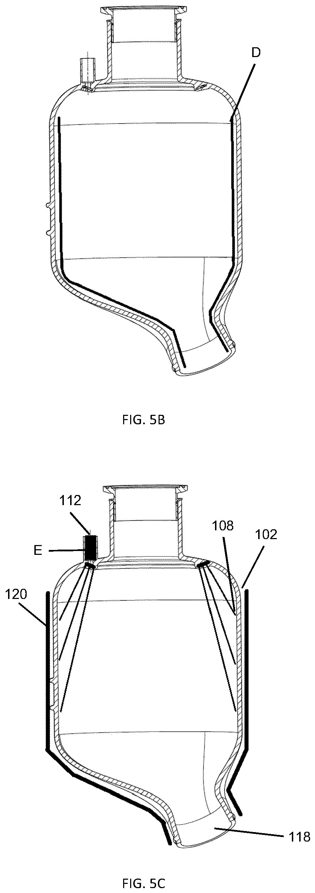

When the tank is to be emptied, the waste W is flushed out in the usual manner (not described further here) via the drain port 118. Any residual debris or contaminants D remaining in the tank are adhered to the coating 114 as shown in Fig. 5B. These can be removed by removing the coating.

The coating 114 can be removed in different ways, depending on the substance used to form the coating. For a ceresin wax coating, for example, the coating 114 can be removed by applying heat exceeding the melting temperature e.g. 90 deg. C of the wax. Other substances will have different melting temperatures. Alternatively, a coating dissolving fluid e.g. ethanol or acidic liquids may be sprayed around the interior of the tank, via the inlet port 112, to dissolve the coating 114. If the coating is removed by heating, this may be done by applying heat to the exterior 102 of the tank. As an example, a heater 120 may be provided adjacent the outer wall 102 of the tank to heat the tank to achieve the melting temperature of the coating at the tank inner wall 108. The melted substance than then easily flow to and out of the drain port 118. In addition, or alternatively, a hot or dissolving fluid E e.g. ethanol or hot water, steam etc can be sprayed into the tank via the inlet port 112 and nozzles 116 (where present) to remove the coating 114. Fig. 5C shows both of these examples, but it should be noted that one or both of the methods may be used or other methods of removing the coating may be used.

As mentioned above, after this cleaning process, a new coating 114 must be applied before the tank is used again.

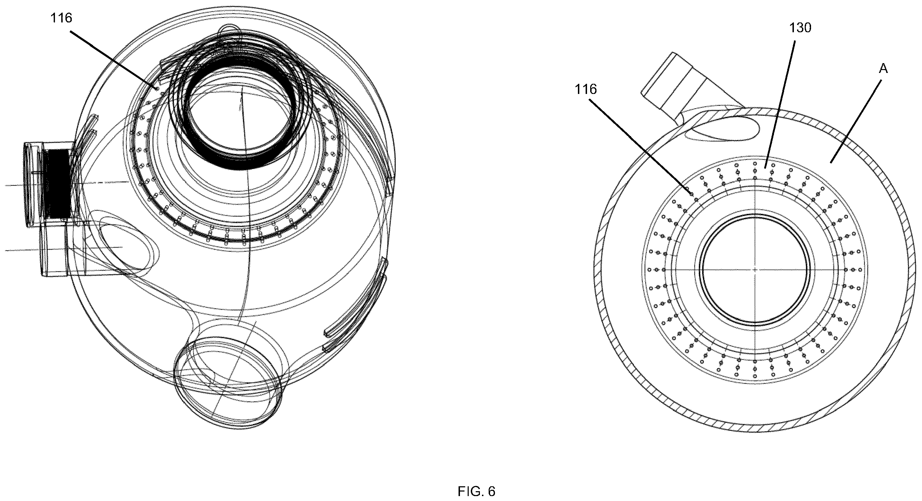

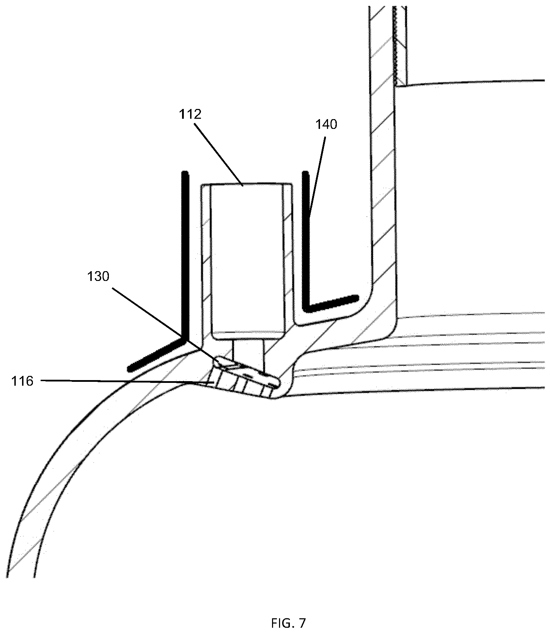

Whilst the cleaning arrangement can use different types of inlet port 112 (with or without spray nozzles 116), Figs. 6 and 7 show an example of an inlet port and spray nozzles that can provide a good coverage of the inner wall with the coating 114. In this example, the inlet port 112 feeds into a fluid channel 130 which can extend and carry the fluid circumferentially around the top of the tank. The channel 130 is provided with a plurality of holes or spray nozzles 116 from which the fluid exits the channel 130 into the interior 110 of the tank and is directed to the tank inner wall 108. This provides a more complete coverage of the coating around the whole interior of the tank.

It is also possible to provide a heater 140 on or adjacent the port 112, e.g. around the port 112 as shown in Fig. 7, to ensure that the coating substance in the port is maintained in the liquid state and does not set in the port or the spray nozzles, causing clogging.

The arrangement according to this disclosure therefore provides a simple, inexpensive and effective way of thoroughly cleaning the inside of a tank, and of even preventing contaminants coming into direct contact with the tank. This simplifies cleaning and also avoids any chemical reaction between the waste contaminants/other substances and the tank. Furthermore, depending on the substance used for the coating and the removable method used, it is possible for the cleaning process to be performed without the need for water.

## Claims

1. A cleaning arrangement for cleaning an interior volume of a tank, the arrangement comprising:
a tank (100), the interior of which is to be cleaned, the tank having a top (104), a bottom (106), and, extending from the top to the bottom, an outer wall (102) and an inner wall (108) defining the interior volume (110); and
wherein the inner wall (108) is provided with a removable coating (114).

2. The cleaning arrangement as claimed in claim 1, further comprising an inlet port (112) formed through the top of the tank via which a substance can be applied to the inner wall to form the coating (114).

3. The cleaning arrangement of claim 2, further comprising a nozzle (116) for ejecting the substance from the inlet port into the interior of the tank.

4. The cleaning arrangement of claim 3, further comprising a circumferential fluid channel (120) in fluid communication with the inlet port and extending circumferentially around a top region of the tank, the fluid channel having a plurality of nozzles (116) via which the substance flows from the fluid channel into the interior of the tank.

5. The cleaning arrangement of any preceding claim, further comprising a drain port (118) at the bottom of the tank.

6. The cleaning arrangement of any preceding claim, wherein the removable coating is formed of a substance that melts on application of heat at a temperature exceeding a predetermined temperature.

7. The cleaning arrangement of claim 6, wherein the predetermined temperature is the maximum operating temperature of the tank.

8. The cleaning arrangement of any preceding claim, wherein the coating is formed of wax.

9. The cleaning arrangement of claim 8, wherein the wax is ceresin wax.

10. The cleaning arrangement of any preceding claim, further comprising a heater adjacent the tank to heat the coating for removal.

11. The cleaning arrangement of any preceding claim, wherein the inlet port (112) is configured to provide a fluid to the coating to remove the coating.

12. The cleaning arrangement of claim 2 or any claim dependent thereon, further comprising a heater adjacent the inlet port.

13. A method of cleaning the interior of a waste tank, the method comprising injecting a coating substance into the tank to coat an inner wall of the tank, the coating providing a barrier between waste entering the tank and the tank, flushing waste from the tank and then removing the coating from the tank.

14. The method of claim 13, wherein the coating is removed by application of heat to cause the coating to melt and/or application of fluid to dissolve the coating.

15. The method of claim 13 or 14, wherein the waste and the coating are removed via a drain port of the tank.
